# EUROPEAN PATENT SPECIFICATION

(11) **EP 3 176 941 B1**
(45) Date of publication and mention of the grant of the patent: **27.05.2020**
(21) Application number: 15832360.0
(22) Date of filing: 04.08.2015
(51) Int. Cl.: H02M 7/487, H02M 7/48, H02M 7/5395, H02M 7/483

(54) **NEUTRAL POINT POTENTIAL CONTROL METHOD FOR SINGLE PHASE NPC INVERTER**
VERFAHREN ZUR STEUERUNG DES NEUTRALPUNKTPOTENZIALS FÜR EINPHASIGE NPC-WECHSELRICHTER
PROCÉDÉ DE COMMANDE DE POTENTIEL DE POINT NEUTRE POUR ONDULEUR NPC À PHASE UNIQUE

(30) Priority: 11.08.2014 JP 2014163268
(43) Date of publication of application: 07.06.2017
(73) Proprietor: Meidensha Corporation, Tokyo 141-6029 (JP)
(72) Inventor: OGURA, Kazuya, Tokyo 141-6029 (JP)
(74) Representative: Manitz Finsterwald Patent- und Rechtsanwaltspartnerschaft mbB
(86) International application number: PCT/JP2015/072093
(87) International publication number: WO 2016/024499

(56) References cited:
- JP-A- 2002 165 460
- JP-A- 2013 110 815
- JP-A- 2013 162 658
- JP-A- 2014 100 025
- WENSHENG SONG ET AL: "A Carrier-Based PWM Strategy With the Offset Voltage Injection for Single-Phase Three-Level Neutral-Point-Clamped Converters", IEEE TRANSACTIONS ON POWER ELECTRONICS, vol. 28, no. 3, March 2013 (2013-03), pages 1083-1095, XP055450771, USA ISSN: 0885-8993, DOI: 10.1109/TPEL.2012.2210248
- ROBERT STALA: "Individual MPPT of photovoltaic arrays with use of single-phase three-level diode-clamped inverter", INDUSTRIAL ELECTRONICS (ISIE), 2010 IEEE INTERNATIONAL SYMPOSIUM ON, IEEE, PISCATAWAY, NJ, USA, 4 July 2010 (2010-07-04), pages 3456-3462, XP031803364, ISBN: 978-1-4244-6390-9

## Description

### Technical Field

The present invention relates to a method for creating a switching pattern for controlling a neutral point potential in a three-level single-phase inverter.

### Background Art

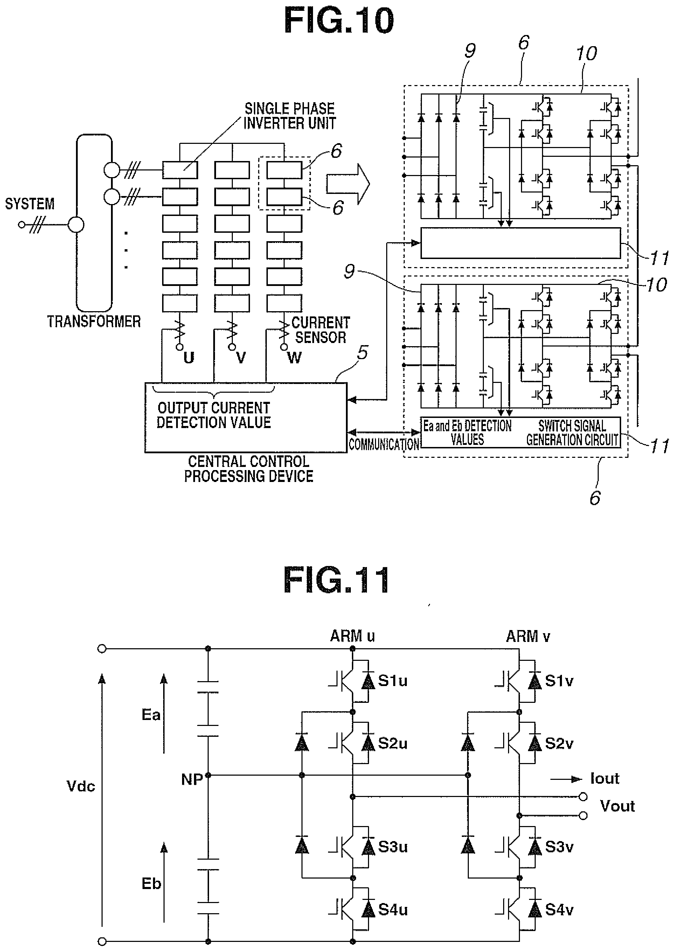

Fig. 11 is a circuit diagram showing an example of a configuration of a single-phase NPC inverter. The single-phase NPC inverter includes a plurality of capacitors which are connected in series between both terminals of a DC voltage source and by which a DC voltage between the both terminals is divided into halves with this voltage division point being a neutral point; an inverter circuit which has a plurality of switches and converts the DC voltage into an AC voltage; and a switching signal generation circuit which controls turning-on and turning-off of the switches of the inverter circuit.

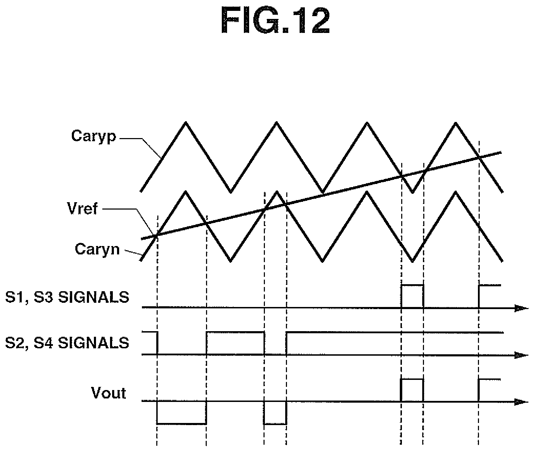

The single-phase NPC inverter can output three levels of voltage at each arm. As a representative modulation method for controlling each arm output voltage, a unipolar modulation method is known. In the unipolar modulation method, as illustrated in Fig. 12, an upper triangular wave carrier signal Caryp for controlling a positive voltage and a lower triangular wave carrier signal Caryn for controlling a negative voltage are provided. By comparing the triangular wave carrier signals Caryp and Caryn with an output voltage command Vref, and by this magnitude relationship, gate signals for the switches (Slu to S4u and S1v to S4v in Fig. 11) are generated. Then, by controlling ON/OFF of the switches S1u to S4u and S1v to S4v, the three levels of voltage can be outputted. In Fig. 11, IGBTs are used as the switches S1u to S4u and S1v to S4v, but may be replaced with self-arc-extinguishing switching devices.

Document "A Carrier-Based PWM Strategy With the Offset Voltage Injection for Single-Phase Three-Level Neutral-Point-Clamped Converters", IEEE Transactions on Power Electronics, vol.28, no.3, March 2013, relates to a neutral point potential control method for a single-phase NPC inverter according to the preamble of claim 1. Document "Individual MPPT of photovoltaic arrays with use of single-phase three-level diode-clamped inverter", IEEE International Symposium on Industrial Electronics (ISIE), 2010, pages 3456-3462, discusses a similar structure of single-phase NPC inverter. As a technique related to the single-phase NPC inverter, it is disclosed in PATENT DOCUMENT 1.

However, the NPC inverter is required to control a potential of a neutral point NP shown in Fig. 11. This is because, if a neutral point potential control is not performed, a DC voltage Ea of an upper arm and a DC voltage Eb of a lower arm are unequal or unbalanced and thus distortion of an output voltage Vout increases.

In a case of the single-phase NPC inverter, there has been proposed a method, as disclosed in PATENT DOCUMENT 1, in which after the triangular wave carrier signals Caryp and Caryn are compared with the output voltage command Vref once, an ON/OFF signal of the switch is operated according to the neutral point potential. However, this method has the following problems (1) to (4).
(1) Operation is complicated, and a control device having fast calculation processing performance is required. As a result, cost of the control device increases.
(2) Since the switch signal is operated after the output voltage command Vref is determined, this operation interferes with a function of controlling a switching timing such as dead time compensation, and thus control operation easily becomes unstable.
(3) In a case where inverters are connected in parallel to each other, switching timings between the inverters are not synchronized with each other. Because of loss of synchronization of the switching timing between the inverters, a cross current easily flows between output terminals of the parallel-connected inverters.
(4) For example, in a case where the inverters are connected in series to each other like a series cell multiplex inverter disclosed in PATENT DOCUMENT 2 and an inverter as shown in Fig. 10, it is impossible to perform the control so that switching timings do not overlap each other.

The problem (4) will be explained. For instance, in a case where the NPC inverter is applied to a single-phase inverter unit for the series cell multiplexing type inverter as shown in Fig. 10, in order to suppress a surge voltage between output terminals (e.g. between a U terminal and a V terminal) of the series cell multiplexing type inverter, switching timings of the single-phase inverter units which are connected in series to each other are controlled so as not to overlap each other. PATENT DOCUMENT 2 discloses this technique.

However, if the switching timings which have been determined so as not to overlap each other in the whole system are changed in order to control the neutral point potential of the NPC inverter, a combination in which the switching timings overlap each other occurs, and this causes increases in the output surge voltage. If the output surge voltage increases, this leads to an adverse effect such as deterioration in insulation of an inverter load.

Further, in the system required to control the plurality of NPC inverters as shown in Fig. 10, there is a case where a calculation processing device that mainly performs the control and a calculation processing device that controls the switching are different from each other. When the neutral point potential control of the NPC inverter gets complicated, a communication data amount between these calculation processing devices increases, and this requires a high-speed and expensive communication module.

### Patent Literature

### PATENT DOCUMENT

[PATENT DOCUMENT 1] Japanese Unexamined Patent Publication No. JPH06-261551
[PATENT DOCUMENT 2] Japanese Unexamined Patent Publication No. JP2006-109688

### Summary of Invention

As described above, a challenge or a task is to control the neutral point potential of the DC voltage without changing the switching timings in the single-phase NPC inverter.

The present invention was made in view of the above technical problems. According to one aspect of the present invention, a neutral point potential control method for a single-phase NPC inverter, the single-phase NPC inverter including a plurality of capacitors which are connected in series between both terminals of a DC voltage source and by which a DC voltage between the both terminals is divided into halves with a voltage division point being a neutral point; an inverter circuit which has a plurality of switches and converts the DC voltage into an AC voltage; and a switching signal generation circuit which controls ON/OFF of the switches of the inverter circuit, the method comprises: in the switching signal generation circuit, providing a plurality of carrier patterns formed by dividing triangular wave carrier signals every 1/2 cycle at a timing when the triangular wave carrier signals cross each other; selecting, from the plurality of carrier patterns, a carrier pattern by which a neutral point potential is balanced on the basis of an upper arm DC voltage detection value, a lower arm DC voltage detection value and an output current detection value; and generating an ON/OFF signal for the each switch by performing a PWM operation that compares the selected carrier pattern with an output voltage command.

The plurality of carrier patterns are a carrier pattern A and a carrier pattern B, and the carrier pattern A is a pattern in which a U-phase upper arm triangular wave carrier signal decreases from 0.5 to 0 in a former 1/4 cycle of the 1/2 cycle and increases from 0 to 0.5 in a latter 1/4 cycle of the 1/2 cycle, a V-phase upper arm triangular wave carrier signal increases from 0.5 to 1 in the former 1/4 cycle of the 1/2 cycle and decreases from 1 to 0.5 in the latter 1/4 cycle of the 1/2 cycle, a U-phase lower arm triangular wave carrier signal decreases from -0.5 to -1 in the former 1/4 cycle of the 1/2 cycle and increases from -1 to -0.5 in the latter 1/4 cycle of the 1/2 cycle, and a V-phase lower arm triangular wave carrier signal increases from -0.5 to 0 in the former 1/4 cycle of the 1/2 cycle and decreases from 0 to -0.5 in the latter 1/4 cycle of the 1/2 cycle, and the carrier pattern B is a pattern in which the U-phase upper arm triangular wave carrier signal increases from 0.5 to 1 in the former 1/4 cycle of the 1/2 cycle and decreases from 1 to 0.5 in the latter 1/4 cycle of the 1/2 cycle, the V-phase upper arm triangular wave carrier signal decreases from 0.5 to 0 in the former 1/4 cycle of the 1/2 cycle and increases from 0 to 0.5 in the latter 1/4 cycle of the 1/2 cycle, the U-phase lower arm triangular wave carrier signal increases from -0.5 to 0 in the former 1/4 cycle of the 1/2 cycle and decreases from 0 to -0.5 in the latter 1/4 cycle of the 1/2 cycle, and the V-phase lower arm triangular wave carrier signal decreases from -0.5 to -1 in the former 1/4 cycle of the 1/2 cycle and increases from -1 to -0.5 in the latter 1/4 cycle of the 1/2 cycle.

The plurality of carrier patterns are a carrier pattern C and a carrier pattern D, and the carrier pattern C is a pattern in which a U-phase upper arm triangular wave carrier signal decreases from 0.5 to 0 in a former 1/4 cycle of the 1/2 cycle and increases from 0 to 0.5 in a latter 1/4 cycle of the 1/2 cycle, a V-phase upper arm triangular wave carrier signal increases from 0.5 to 1 in the former 1/4 cycle of the 1/2 cycle and decreases from 1 to 0.5 in the latter 1/4 cycle of the 1/2 cycle, a U-phase lower arm triangular wave carrier signal increases from -0.5 to 0 in the former 1/4 cycle of the 1/2 cycle and decreases from 0 to -0.5 in the latter 1/4 cycle of the 1/2 cycle, and a V-phase lower arm triangular wave carrier signal decreases from -0.5 to -1 in the former 1/4 cycle of the 1/2 cycle and increases from -1 to -0.5 in the latter 1/4 cycle of the 1/2 cycle, and the carrier pattern D is a pattern in which the U-phase upper arm triangular wave carrier signal increases from 0.5 to 1 in the former 1/4 cycle of the 1/2 cycle and decreases from 1 to 0.5 in the latter 1/4 cycle of the 1/2 cycle, the V-phase upper arm triangular wave carrier signal decreases from 0.5 to 0 in the former 1/4 cycle of the 1/2 cycle and increases from 0 to 0.5 in the latter 1/4 cycle of the 1/2 cycle, the U-phase lower arm triangular wave carrier signal decreases from -0.5 to -1 in the former 1/4 cycle of the 1/2 cycle and increases from -1 to -0.5 in the latter 1/4 cycle of the 1/2 cycle, and the V-phase lower arm triangular wave carrier signal increases from -0.5 to 0 in the former 1/4 cycle of the 1/2 cycle and decreases from 0 to -0.5 in the latter 1/4 cycle of the 1/2 cycle.

According to another aspect of the present invention, a neutral point potential control method for a single-phase NPC inverter, the single-phase NPC inverter including a plurality of capacitors which are connected in series between both terminals of a DC voltage source and by which a DC voltage between the both terminals is divided into halves with a voltage division point being a neutral point; an inverter circuit which has a plurality of switches and converts the DC voltage into an AC voltage; and a switching signal generation circuit which controls ON/OFF of the switches of the inverter circuit, the method comprises: in the switching signal generation circuit, determining carrier cross timing information and after-transition area information by a PWM operation that compares an output voltage command and a triangular wave carrier signal; and generating an ON/OFF signal for the each switch by which a neutral point potential is balanced, using the carrier cross timing information, the after-transition area information, an upper arm DC voltage detection value, a lower arm DC voltage detection value and an output current detection value.

According to a further aspect of the invention, a neutral point potential control method for a series cell multiplex inverter including a plurality of single-phase inverter units, the single-phase inverter unit including a single-phase NPC inverter and having a function of communicating with a central control processing device, the method comprises: controlling a neutral point potential of each single-phase NPC inverter by using the control method according to any one of claims 1 to 4.

According to the present invention, it is possible to control the neutral point potential of the DC voltage without changing the switching timings in the single-phase NPC inverter.

### Brief Description of Drawings

Fig. 1 is a time chart showing triangular wave carrier signals and an output voltage command.
Fig. 2 is a diagram showing the triangular wave carrier signals and charge and discharge areas.
Fig. 3 is a diagram for explaining a carrier pattern and a charge-and-discharge control.
Fig. 4 is a block diagram showing a switching signal generation circuit of an NPC inverter according to an embodiment 1.
Fig. 5 is a diagram showing the carrier pattern in the embodiment 1.
Fig. 6 is a block diagram showing a switching signal generation circuit of the NPC inverter according to an embodiment 2.
Fig. 7 is a diagram showing the carrier pattern in the embodiment 2.
Fig. 8 is a block diagram showing a switching signal generation circuit of the NPC inverter according to an embodiment 3.
Fig. 9 is a block diagram showing a switching signal generation circuit of the NPC inverter according to an embodiment 4.
Fig. 10 is a block diagram showing single-phase inverter units for a series cell multiplexing type inverter.
Fig. 11 is a circuit diagram showing an example of the single-phase NPC inverter.
Fig. 12 is a time chart showing each waveform in a unipolar modulation method.

### Description of Embodiments

### [Principle Explanation]

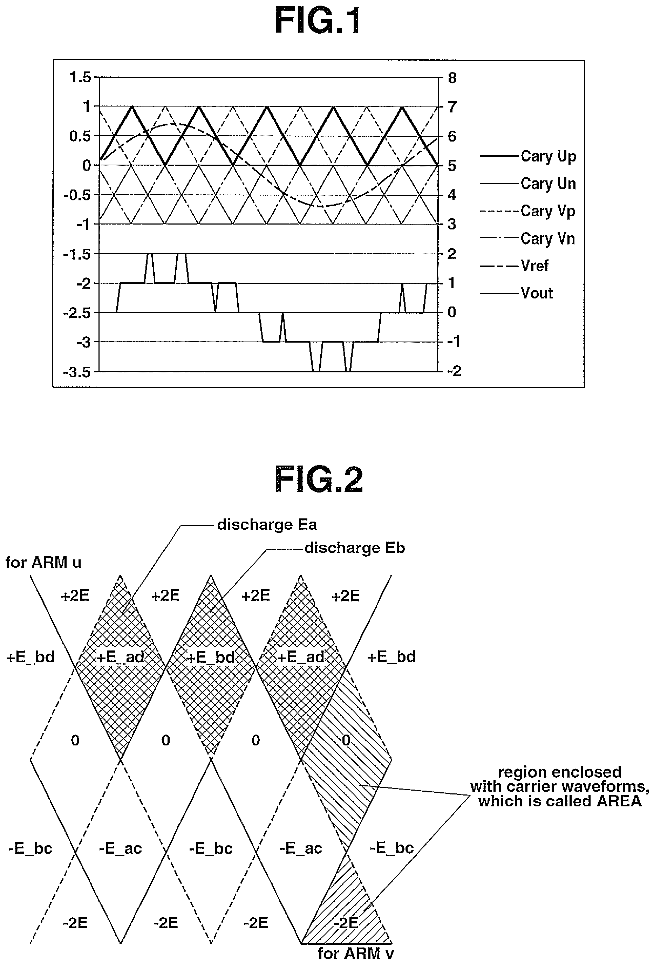

Fig. 1 is a time chart showing comparison of a PWM carrier in a single-phase NPC inverter. A reference sign Cary Up (thick line) indicates an upper arm triangular wave carrier signal for a U-phase. A reference sign Cary Un (thin line) indicates a lower arm triangular wave carrier signal for the U-phase. A reference sign Cary Vp (dotted line) indicates an upper arm triangular wave carrier signal for a V-phase. A reference sign Cary Vn (chain line) indicates a lower arm triangular wave carrier signal for the V-phase. A reference sign Vref (sinusoidal waveform) indicates an output voltage command. A reference sign Vout (pulsed waveform) indicates an output voltage.

Here, a phase difference between the U-phase upper arm triangular wave carrier signal Cary Up and the V-phase upper arm triangular wave carrier signal Cary Vp is 180°, a phase difference between the U-phase lower arm triangular wave carrier signal Cary Un and the V-phase lower arm triangular wave carrier signal Cary Vn is 180°, and one output voltage command Vref is used. A waveform of the output voltage Vout at this time shows three levels in terms of the phase, and shows five levels in terms of a line voltage.

Table 1 shows the output voltage Vout, a switching state in each phase and a charge/discharge state of a DC voltage Ea and a DC voltage Eb by an output current. The DC voltage Ea and the DC voltage Eb here correspond to voltages shown in Fig. 11. A direction in which an output current Iout flows out of the U-phase is set to be a positive direction. If the current direction changes to an opposite direction, charge/discharge characteristics are reversed.

**[Table 1]**

| Output voltage | U-phase voltage | V-phase voltage | Output current | Ea state | Eb state | Area name |
|---|---|---|---|---|---|---|
| +2E | +E | -E | Positive | Discharge | Discharge | +2E |
| | | | Negative | Charge | Charge | |
| +E | +E | NP | Positive | Discharge | - | +E_ad _ |
| | | | Negative | Charge | - | |
| +E | NP | -E | Positive | - | Discharge | +E_bd |
| | | | Negative | - | Charge | |
| 0 | +E | +E | Positive | - | - | 0 |
| | | | Negative | - | - | |
| 0 | NP | NP | Positive | - | - | 0 |
| | | | Negative | - | - | |
| 0 | -E | -E | Positive | - | - | 0 |
| | | | Negative | - | - | |
| -E | NP | +E | Positive | Charge | - | -E_ac |
| | | | Negative | Discharge | - | |
| -E | -E | NP | Positive | Charge | - | -E_bc |
| | | | Negative | Discharge | - | |
| -2E | -E | +E | Positive | Charge | Charge | -2E |
| | | | Negative | Discharge | Discharge | |

Fig. 2 shows the charge/discharge characteristics of the DC voltage Ea and the DC voltage Eb in a case where the output voltage command Vref is present in an area formed by the triangular wave carrier signals Cary Up, Cary Un and Cary Vp, Cary Vn. Names of the areas correspond to those shown in Table 1. It is noted here that charge/discharge characteristics in areas defined by the triangular wave carrier signals Cary Up, Cary Un and Cary Vp, Cary Vn are determined uniquely or univocally by the direction of the current.

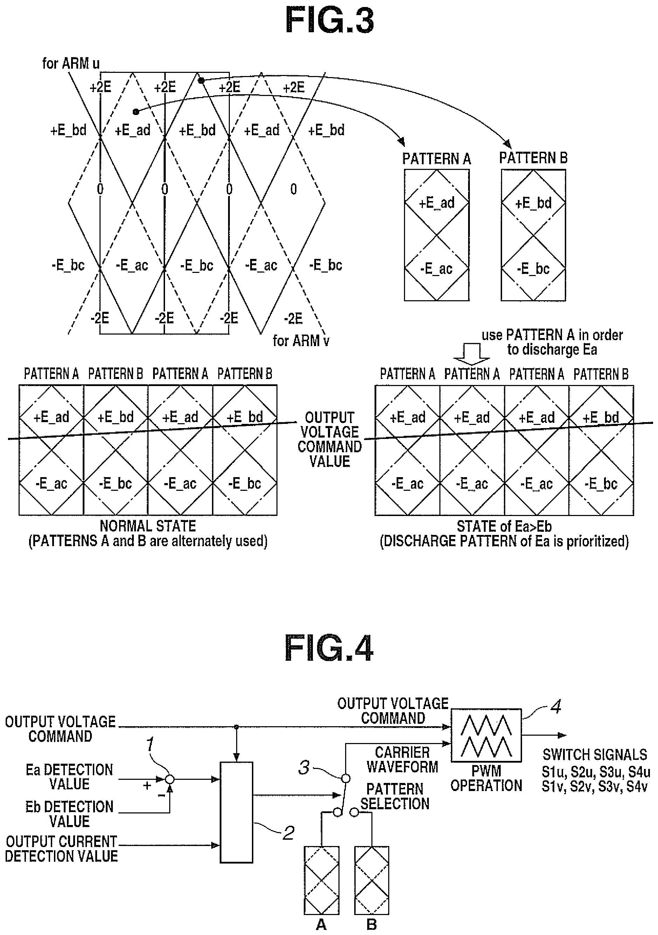

Here, as shown in Fig. 3, a range of the triangular wave carrier signal, which is divided every 1/2 cycle or period, is focused. By using the fact that, at both ends of each control time period, the U-phase upper arm triangular wave carrier signal Cary Up and the V-phase upper arm triangular wave carrier signal Cary Vp cross each other and the U-phase lower arm triangular wave carrier signal Cary Un and the V-phase lower arm triangular wave carrier signal Cary Vn cross each other, carrier waveforms in the respective ranges can be switched.

Therefore, by switching between the carrier waveforms that are patterns divided every 1/2 cycle (hereinafter, called carrier patterns) according to the states of the DC voltage Ea and the DC voltage Eb and the current direction, it is possible to control a balance between the upper arm DC voltage Ea and the lower arm DC voltage Eb.

For instance, in Fig. 4, in a case where the DC voltage Ea is higher than the DC voltage Eb in a state in which the voltage command is positive (using the upper triangular wave carrier signals Cary Up and Cary Vp), it is necessary to discharge the DC voltage Ea or to charge the DC voltage Eb. Therefore, by employing many patterns A (for discharging Ea), a ratio in which the DC voltage Ea is discharged can be increased, thereby controlling the DC voltage Ea and the DC voltage Eb to a balanced direction.

Here, advantages of the present invention are summarized.
(1) It is possible to perform the balance control of a neutral point potential by selecting the carrier pattern.
(2) A fundamental voltage switching pattern is not changed (a switching timing is not changed).

Therefore, interference with the function of controlling the switching timing, timing deviation in the case where the inverters are connected in parallel to each other, and overlap of the switching timings in the case where the inverters are connected in series to each other, which are described as technical problems in "Technical Field", are not changed at all between before and after the present control is applied. Therefore, the present invention can easily be applied to the related art control.

In the following description, embodiments 1 to 4 of a method of controlling the neutral point potential of the single-phase NPC inverter according to the present invention will be explained with reference to Figs. 4 to 10.

### [Embodiment 1]

In an embodiment 1, in the single-phase NPC inverter, two types of the carrier patterns are extracted or selected from the triangular wave carrier signals of the related art as shown in Fig. 3, and a carrier pattern to be used is selected on the basis of a balanced state of the neutral point potential, the direction of the output current and a range of the output voltage command Vref. A PWM operation (or A PWM process) that compares this selected carrier pattern with the output voltage command Vref is performed, then switch signals are generated.

Fig. 4 is a block diagram showing a switching signal generation circuit of the single-phase NPC inverter according to the embodiment 1. As shown in Fig. 4, a subtractor 1 subtracts the DC voltage Eb from the DC voltage Ea, and outputs a difference Ea-Eb to a switching pattern selection processing portion 2. The switching pattern selection processing portion 2 selects one of the carrier pattern A and a carrier pattern B on the basis of the difference Ea-Eb of the DC voltage, the output voltage command Vref and an output current detection value, and performs a switching operation of a switch 3.

The switch 3 outputs a triangular wave carrier signal of one of the carrier pattern A and the carrier pattern B by a switching signal from the switching pattern selection processing portion 2, to a PWM processing portion 4. The PWM processing portion 4 compares the triangular wave carrier signal outputted from the switch 3 with the output voltage command Vref, and generates switch signals S1u, S2u, S3u, S4u, S1v, S2v, S3v and S4v.

Table 2 shows carrier patterns according to positive and negative of the output voltage command Vref, the difference Ea-Eb of the DC voltage and positive and negative of the current. As shown in Table 2, it is possible to select the carrier pattern A or the carrier pattern B on the basis of the positive and negative of the output voltage command Vref, the positive and negative of the difference Ea-Eb of the DC voltage and the positive and negative of the current, thereby controlling the charge and discharge of the DC voltages Ea and Eb.

**[Table 2]**

| Voltage command | Ea-Eb | Current | Pattern selection | Charge and discharge characteristics |
|---|---|---|---|---|
| Positive (use upper carrier) | Positive | Positive | A | Discharge Ea |
| | | Negative | B | Charge Eb |
| | Negative | Positive | B | Discharge Eb |
| | | Negative | A | Charge Ea |
| Negative (use lower carrier) | Positive | Positive | B | Charge Eb |
| | | Negative | A | Discharge Ea |
| | Negative | Positive | A | Charge Ea |
| | | Negative | B | Discharge Eb |

In the carrier pattern A, the U-phase upper arm triangular wave carrier signal Cary Up decreases from 0.5 to 0 in a former 1/4 cycle of the 1/2 cycle, and increases from 0 to 0.5 in a latter 1/4 cycle of the 1/2 cycle. The V-phase upper arm triangular wave carrier signal Cary Vp increases from 0.5 to 1 in the former 1/4 cycle of the 1/2 cycle, and decreases from 1 to 0.5 in the latter 1/4 cycle of the 1/2 cycle. The U-phase lower arm triangular wave carrier signal Cary Un decreases from -0.5 to -1 in the former 1/4 cycle of the 1/2 cycle, and increases from -1 to -0.5 in the latter 1/4 cycle of the 1/2 cycle. The V-phase lower arm triangular wave carrier signal Cary Vn increases from -0.5 to 0 in the former 1/4 cycle of the 1/2 cycle, and decreases from 0 to -0.5 in the latter 1/4 cycle of the 1/2 cycle.

In the carrier pattern B, the U-phase upper arm triangular wave carrier signal Cary Up increases from 0.5 to 1 in the former 1/4 cycle of the 1/2 cycle, and decreases from 1 to 0.5 in the latter 1/4 cycle of the 1/2 cycle. The V-phase upper arm triangular wave carrier signal Cary Vp decreases from 0.5 to 0 in the former 1/4 cycle of the 1/2 cycle, and increases from 0 to 0.5 in the latter 1/4 cycle of the 1/2 cycle. The U-phase lower arm triangular wave carrier signal Cary Un increases from -0.5 to 0 in the former 1/4 cycle of the 1/2 cycle, and decreases from 0 to -0.5 in the latter 1/4 cycle of the 1/2 cycle. The V-phase lower arm triangular wave carrier signal Cary Vn decreases from -0.5 to -1 in the former 1/4 cycle of the 1/2 cycle, and increases from -1 to -0.5 in the latter 1/4 cycle of the 1/2 cycle.

By this manner, it is possible to control the neutral point potential without changing the switching timing of the output voltage.

According to the neutral point potential control method of the NPC single-phase inverter of the embodiment 1, the neutral point potential in the NPC inverter can be controlled in a simple method without changing the switching timing. This leads to low cost and size reduction of the control device. Further, the neutral point potential control is possible by the single-phase NPC inverter alone without requiring a neutral point balance control by an external device.

In addition, in the case where single-phase NPC inverters are connected in parallel to each other, it is possible to easily synchronize the switching timings between the parallel-connected inverters. This brings about a reduction in the cross current between output terminals of the parallel-connected inverters.

In the case where the NPC inverters are connected in series to each other, it is possible to easily avoid the overlap of the switching timings between the series-connected inverters. This brings about a reduction in an output surge voltage of the series cell multiplex inverter.

### [Embodiment 2]

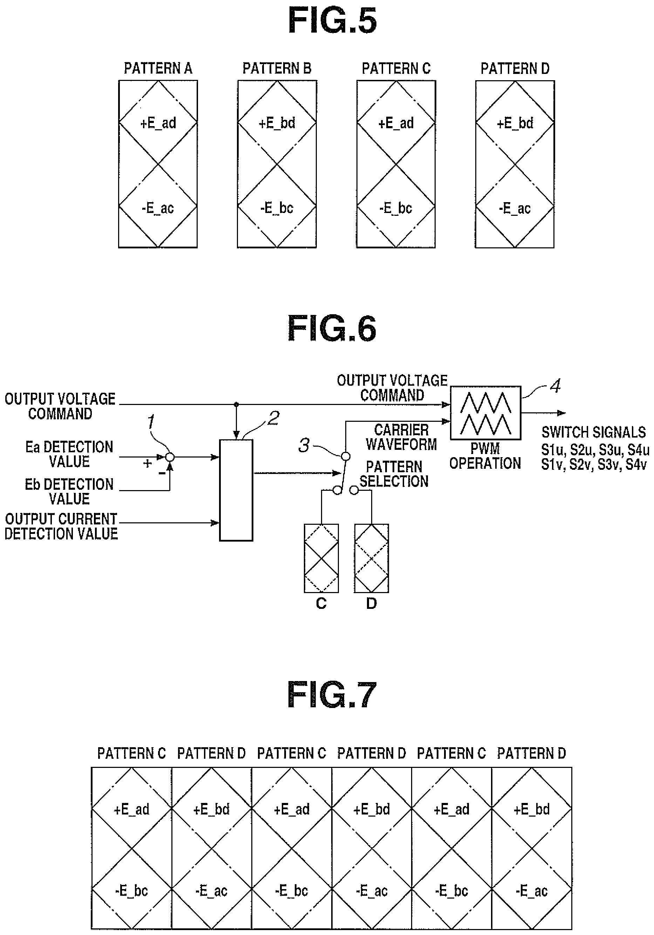

When considering all carrier patterns of the triangular wave carrier signals, four patterns shown in Fig. 5 are present. Here, when the pattern A and the pattern B in Table. 2 are respectively replaced with a pattern C and a pattern D, Table 3 is obtained.

**[Table 3]**

| Voltage command | Ea-Eb | Current | Pattern selection | Charge and discharge characteristics |
|---|---|---|---|---|
| Positive | Positive | Positive | C | Discharge Ea |
| | | Negative | D | Charge Eb |
| | Negative | Positive | D | Discharge Eb |
| | | Negative | C | Charge Ea |
| Negative | Positive | Positive | C | Discharge Ea |
| | | Negative | D | Charge Eb |
| | Negative | Positive | D | Discharge Eb |
| | | Negative | C | Charge Ea |

In the carrier pattern C, the U-phase upper arm triangular wave carrier signal Cary Up decreases from 0.5 to 0 in the former 1/4 cycle of the 1/2 cycle, and increases from 0 to 0.5 in the latter 1/4 cycle of the 1/2 cycle. The V-phase upper arm triangular wave carrier signal Cary Vp increases from 0.5 to 1 in the former 1/4 cycle of the 1/2 cycle, and decreases from 1 to 0.5 in the latter 1/4 cycle of the 1/2 cycle. The U-phase lower arm triangular wave carrier signal Cary Un increases from -0.5 to 0 in the former 1/4 cycle of the 1/2 cycle, and decreases from 0 to -0.5 in the latter 1/4 cycle of the 1/2 cycle. The V-phase lower arm triangular wave carrier signal Cary Vn decreases from -0.5 to -1 in the former 1/4 cycle of the 1/2 cycle, and increases from -1 to -0.5 in the latter 1/4 cycle of the 1/2 cycle.

In the carrier pattern D, the U-phase upper arm triangular wave carrier signal Cary Up increases from 0.5 to 1 in the former 1/4 cycle of the 1/2 cycle, and decreases from 1 to 0.5 in the latter 1/4 cycle of the 1/2 cycle. The V-phase upper arm triangular wave carrier signal Cary Vp decreases from 0.5 to 0 in the former 1/4 cycle of the 1/2 cycle, and increases from 0 to 0.5 in the latter 1/4 cycle of the 1/2 cycle. The U-phase lower arm triangular wave carrier signal Cary Un decreases from -0.5 to -1 in the former 1/4 cycle of the 1/2 cycle, and increases from -1 to -0.5 in the latter 1/4 cycle of the 1/2 cycle. The V-phase lower arm triangular wave carrier signal Cary Vn increases from -0.5 to 0 in the former 1/4 cycle of the 1/2 cycle, and decreases from 0 to -0.5 in the latter 1/4 cycle of the 1/2 cycle.

In the embodiment 2, by using the carrier patterns C and D shown in Fig. 5 in the single-phase NPC inverter, a carrier pattern of the triangular wave carrier signals to be used is selected on the basis of the balanced state of the neutral point potential and the direction of the output current Iout. A PWM operation that compares this selected carrier pattern of the triangular wave carrier signals with the output voltage command Vref is performed, then the switch signals S1u, S2u, S3u, S4u, S1v, S2v, S3v and S4v are generated.

Fig. 6 shows a switching signal generation circuit of the single-phase NPC inverter according to the embodiment 2. Switching signals of the single-phase NPC inverter in the embodiment 2 are obtained by replacing the carrier pattern A and the carrier pattern B in the embodiment 1 with the carrier pattern C and the carrier pattern D. In the embodiment 2, input of the output voltage command Vref to the switching pattern selection processing portion 2 is not necessary. Other configurations are the same as those in Fig. 4.

Therefore, since the carrier patterns are the same between positive and negative of the output voltage command Vref, it is not required to switch the carrier patterns on the basis of the output voltage command Vref. This is an advantage over the embodiment 1 using the pattern A and the pattern B.

By this manner, it is possible to control the neutral point potential without changing the switching timing of the output voltage Vout.

According to a power conversion device in the embodiment 2, the same effects as those of the embodiment 1 are obtained. Further, by using the carrier patterns C and D, it is possible to take a pattern configuration that does not depend on the output voltage command Vref, and thus a configuration of a control unit can be simplified as compared with the embodiment 1.

### [Embodiment 3]

The embodiments 1 and 2 show a case where the pattern is selected before performing the PWM operation that compares the output voltage command Vref and the triangular wave carrier signal. However, there is a case where it is desirable to switch the charge/discharge characteristics after performing the PWM operation, depending on a system configuration. An embodiment 3 is an embodiment that realizes this method.

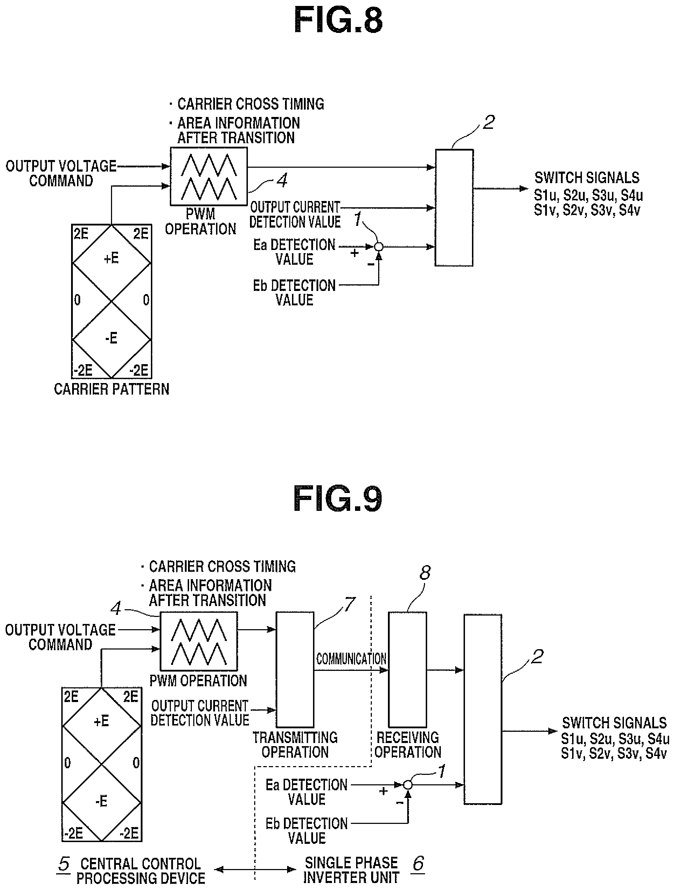

Fig. 8 is a block diagram showing a switching signal generation circuit of the single-phase NPC inverter according to the embodiment 3. In the embodiment 3, as shown in Fig. 8, first, the PWM processing portion 4 compares the carrier pattern with the output voltage command Vref, and generates timing information indicating a timing at which an area transition takes place (indicating a cross timing of a normal triangular wave carrier signal and the output voltage command: a carrier cross timing) and area information (five types such as +2E, +E, 0, -E, and -2E) after the transition (after-transition area information).

**[Table 4]**

| Area after transition | DC state | Current detection | E1 Charge and discharge | E2 Charge and discharge | Arm u voltage | Arm v voltage | S1u, S3u | S2u, S4u | S1v, S3v | S2v, S4v |
|---|---|---|---|---|---|---|---|---|---|---|
| +2E | E1>E2 | Positive | No | No | +E | -E | ON | ON | OFF | OFF |
| | | Negative | | | | | | | | |
| | E1<E2 | Positive | | | | | | | | |
| | | Negative | | | | | | | | |
| +E | E1>E2 | Positive | Discharge | No | +E | 0 | ON | ON | OFF | ON |
| | | Negative | No | Charge | 0 | -E | OFF | ON | OFF | OFF |
| | E1<E2 | Positive | No | Discharge | 0 | -E | OFF | ON | OFF | OFF |
| | | Negative | Charge | No | +E | 0 | ON | ON | OFF | ON |
| 0 | E1>E2 | Positive | No | No | 0 | 0 | OFF | ON | OFF | ON |
| | | Negative | | | | | | | | |
| | E1<E2 | Positive | | | | | | | | |
| | | Negative | | | | | | | | |
| -E | E1>E2 | Positive | No | Charge | -E | 0 | OFF | OFF | OFF | ON |
| | | Negative | Discharge | No | 0 | +E | OFF | ON | ON | ON |
| | E1<E2 | Positive | Charge | No | 0 | +E | OFF | ON | ON | ON |
| | | Negative | No | Discharge | -E | 0 | OFF | OFF | OFF | ON |
| -2E | E1>E2 | Positive | No | No | -E | +E | OFF | OFF | ON | ON |
| | | Negative | | | | | | | | |
| | E1<E2 | Positive | | | | | | | | |
| | | Negative | | | | | | | | |

Subsequently, the switching pattern selection processing portion 2 generates the switch signals of S1u to S4u and S1v to S4v on the basis of the switching pattern shown in Table 4 by using the timing information indicating the timing of the area transition (the carrier cross timing information), the area information after the transition, the output current detection value Iout and the difference Ea-Eb between the upper arm DC voltage Ea and the lower arm DC voltage Eb outputted from the subtractor 1.

According to the neutral point potential control method of the single-phase NPC inverter in the embodiment 3, it is possible to control the neutral point potential in the same manner as in the embodiment 1 and Embodiment 2.

Further, the embodiment 3 is suitable for a device in which a detection sensor of the output current Iout, a detection sensor of the upper arm DC voltage Ea and a detection sensor of the lower arm DC voltage Eb are positioned away from the PWM processing portion 4 and also positioned close to the switching pattern selection processing portion 2. This is because a wiring distance between each sensor and the switching pattern selection processing portion 2 is short, and thus the device is readily manufactured and noise resistance is improved.

### [Embodiment 4]

In a case where a plurality of single-phase inverter units are connected in series to each other like the series cell multiplexing type inverter as shown in PATENT DOCUMENT 2, as shown in Fig. 9, it is necessary to allot or allocate roles or functions to a central control processing device 5 and a control processing device of each single-phase inverter unit 6. For instance, in a case where the central control processing device 5 performs the PWM operation and detection of the output current Iout and each single-phase inverter unit 6 performs detection of the DC voltages Ea and Eb, detection values of the DC voltages Ea and Eb by the single-phase inverter unit 6 are periodically sent to the central control processing device. This leads to an increase in a communication amount, and causes trouble with system communication.

Thus, when a system is configured without returning such information, the system as shown in Fig. 9 is configured. The system is configured by providing a transmission processing portion 7 in the central control processing device 5 and providing a reception processing portion 8 in the single-phase inverter unit 6 by applying the embodiment 3.

Fig. 10 shows a configuration in which the system of Fig. 9 is applied to the series cell multiplex inverter.

The single-phase inverter unit 6 in Fig. 10 is formed by a diode rectifier 9 that converts a three-phase AC voltage to a DC voltage, the single-phase NPC inverter 10 and a switching signal generation circuit 11 provided in the single-phase NPC inverter. Here, the diode rectifier 9 may be replaced with a PWM converter using a self-arc-extinguishing switching device.

In the configurations shown in Figs. 9 and 10, since the single-phase inverter unit 6 detects the upper arm DC voltage Ea and the lower arm DC voltage Eb, this detection information is not transmitted and received between the central control processing device 5 and the single-phase inverter unit 6. Thus, a communication amount is reduced. Consequently, it is not required to use a high-speed and expensive communication module, thereby reducing the cost.

The series cell multiplex inverter is not limited to the control configuration shown in Fig. 9. The control configurations in the embodiments 1 and 2 may be applied to the single-phase inverter unit of the series cell multiplex inverter. In this case, in Figs. 4 and 6, the central control processing device transmits the output voltage command and the detection value of the output current to each single-phase inverter unit, and other elements (such as the switching pattern selection processing portion 2) are provided in the single-phase inverter unit.

Although only the above embodiments of the present invention have been explained in detail, it is obvious to those skilled in the art that modifications and equivalents belonging to the technical scope of the present invention can be possible. The invention, however, is defined by the claims.

Fig. 10 shows an example of the configuration in which the number of single-phase inverter units is six for each phase, and the number of phases is three. As a matter of course, the invention of the embodiment 4 can be applicable to series cell multiplexing type inverters having any other number of single-phase inverter units and any other number of phases.

## Claims

1. A neutral point potential control method for a single-phase NPC inverter, the single-phase NPC inverter including a plurality of capacitors which are connected in series between both terminals of a DC voltage source and by which a DC voltage (Vdc) between the both terminals is divided into halves with a voltage division point being a neutral point (NP); an inverter circuit which has a plurality of switches (Slu-S4u, S1v-S4v) and converts the DC voltage into an AC voltage; and a switching signal generation circuit (11) which controls ON/OFF of the switches of the inverter circuit,
**characterized by**:
in the switching signal generation circuit (11),
providing a plurality of carrier patterns formed by dividing triangular wave carrier signals every 1/2 cycle at a timing when the triangular wave carrier signals cross each other;
selecting, from the plurality of carrier patterns, a carrier pattern by which a neutral point potential is balanced on the basis of an upper arm DC voltage detection value (Ea), a lower arm DC voltage detection value (Eb) and an output current detection value (lout); and
generating an ON/OFF signal for the each switch by performing a PWM operation that compares the selected carrier pattern with an output voltage command (Vref).

2. The neutral point potential control method for the single-phase NPC inverter as claimed in claim 1, wherein:
the plurality of carrier patterns are a carrier pattern A and a carrier pattern B,
the carrier pattern A is a pattern in which a U-phase upper arm triangular wave carrier signal (Cary Up) decreases from 0.5 to 0 in a former 1/4 cycle of the 1/2 cycle and increases from 0 to 0.5 in a latter 1/4 cycle of the 1/2 cycle, a V-phase upper arm triangular wave carrier signal (Cary Vp) increases from 0.5 to 1 in the former 1/4 cycle of the 1/2 cycle and decreases from 1 to 0.5 in the latter 1/4 cycle of the 1/2 cycle, a U-phase lower arm triangular wave carrier signal (Cary Un) decreases from -0.5 to -1 in the former 1/4 cycle of the 1/2 cycle and increases from -1 to -0.5 in the latter 1/4 cycle of the 1/2 cycle, and a V-phase lower arm triangular wave carrier signal (Cary Vn) increases from -0.5 to 0 in the former 1/4 cycle of the 1/2 cycle and decreases from 0 to -0.5 in the latter 1/4 cycle of the 1/2 cycle, and
the carrier pattern B is a pattern in which the U-phase upper arm triangular wave carrier signal (Cary Up) increases from 0.5 to 1 in the former 1/4 cycle of the 1/2 cycle and decreases from 1 to 0.5 in the latter 1/4 cycle of the 1/2 cycle, the V-phase upper arm triangular wave carrier signal (Cary Vp) decreases from 0.5 to 0 in the former 1/4 cycle of the 1/2 cycle and increases from 0 to 0.5 in the latter 1/4 cycle of the 1/2 cycle, the U-phase lower arm triangular wave carrier signal (Cary Un) increases from -0.5 to 0 in the former 1/4 cycle of the 1/2 cycle and decreases from 0 to -0.5 in the latter 1/4 cycle of the 1/2 cycle, and the V-phase lower arm triangular wave carrier signal (Cary Vn) decreases from -0.5 to -1 in the former 1/4 cycle of the 1/2 cycle and increases from -1 to -0.5 in the latter 1/4 cycle of the 1/2 cycle.

3. The neutral point potential control method for the single-phase NPC inverter as claimed in claim 1, wherein:
the plurality of carrier patterns are a carrier pattern C and a carrier pattern D,
the carrier pattern C is a pattern in which a U-phase upper arm triangular wave carrier signal (Cary Up) decreases from 0.5 to 0 in a former 1/4 cycle of the 1/2 cycle and increases from 0 to 0.5 in a latter 1/4 cycle of the 1/2 cycle, a V-phase upper arm triangular wave carrier signal (Cary Vp) increases from 0.5 to 1 in the former 1/4 cycle of the 1/2 cycle and decreases from 1 to 0.5 in the latter 1/4 cycle of the 1/2 cycle, a U-phase lower arm triangular wave carrier signal (Cary Un) increases from -0.5 to 0 in the former 1/4 cycle of the 1/2 cycle and decreases from 0 to -0.5 in the latter 1/4 cycle of the 1/2 cycle, and a V-phase lower arm triangular wave carrier signal (Cary Vn) decreases from -0.5 to -1 in the former 1/4 cycle of the 1/2 cycle and increases from -1 to -0.5 in the latter 1/4 cycle of the 1/2 cycle, and
the carrier pattern D is a pattern in which the U-phase upper arm triangular wave carrier signal (Cary Up) increases from 0.5 to 1 in the former 1/4 cycle of the 1/2 cycle and decreases from 1 to 0.5 in the latter 1/4 cycle of the 1/2 cycle, the V-phase upper arm triangular wave carrier signal (Cary Vp) decreases from 0.5 to 0 in the former 1/4 cycle of the 1/2 cycle and increases from 0 to 0.5 in the latter 1/4 cycle of the 1/2 cycle, the U-phase lower arm triangular wave carrier signal (Cary Un) decreases from -0.5 to -1 in the former 1/4 cycle of the 1/2 cycle and increases from -1 to -0.5 in the latter 1/4 cycle of the 1/2 cycle, and the V-phase lower arm triangular wave carrier signal (Cary Vn) increases from -0.5 to 0 in the former 1/4 cycle of the 1/2 cycle and decreases from 0 to -0.5 in the latter 1/4 cycle of the 1/2 cycle.

4. A neutral point potential control method for a single-phase NPC inverter, the single-phase NPC inverter including a plurality of capacitors which are connected in series between both terminals of a DC voltage source and by which a DC voltage (Vdc) between the both terminals is divided into halves with a voltage division point being a neutral point (NP); an inverter circuit which has a plurality of switches (S1u-S4u, S1v-S4v) and converts the DC voltage into an AC voltage; and a switching signal generation circuit (11) which controls ON/OFF of the switches of the inverter circuit,
**characterized by**:
in the switching signal generation circuit (11),
determining carrier cross timing information and area information after transition of an area that is formed by being enclosed with triangular wave carrier signals, by a PWM operation that compares an output voltage command (Vref) and a carrier pattern formed by dividing the triangular wave carrier signals every 1/2 cycle at a timing when the triangular wave carrier signals cross each other; and
generating an ON/OFF signal for the each switch by which a neutral point potential is balanced, using the carrier cross timing information, the area information after transition of the area, an upper arm DC voltage detection value (Ea), a lower arm DC voltage detection value (Eb) and an output current detection value (lout).

5. A neutral point potential control method for a series cell multiplex inverter including a plurality of single-phase inverter units, the single-phase inverter unit including a single-phase NPC inverter and having a function of communicating with a central control processing device, the method comprising:
controlling a neutral point potential of each single-phase NPC inverter by using the control method according to any one of claims 1 to 4.

6. A single-phase NPC inverter adapted for using the neutral point potential control method according to any one of claims 1 to 4.

7. A series cell multiplex inverter comprising:
a single-phase inverter unit (6) that includes a single-phase NPC inverter adapted for using the neutral point potential control method according to claim 5.

## Patentansprüche

1. Verfahren zur Steuerung des Neutralpunktpotentials für einen einphasigen NPC-Wechselrichter, wobei der einphasige NPC-Wechselrichter eine Vielzahl von Kondensatoren, die zwischen beiden Anschlüssen einer Gleichspannungsquelle in Reihe geschaltet sind und durch die eine Gleichspannung (Vdc) zwischen den beiden Anschlüssen in Hälften geteilt wird, wobei ein Spannungsteilungspunkt ein Neutralpunkt (NP) ist; eine Wechselrichterschaltung, die eine Vielzahl von Schaltern (S1u-S4u, S1v-S4v) aufweist und die Gleichspannung in eine Wechselspannung umwandelt; und eine Schaltsignalerzeugungsschaltung (11) beinhaltet, die das EINSCHALTEN/AUSSCHALTEN der Schalter der Wechselrichterschaltung steuert,
**dadurch gekennzeichnet, dass**:
in der Schaltsignalerzeugungsschaltung (11),
eine Vielzahl von Trägermustern bereitgestellt wird, die durch Teilen von Dreieckwellen-Trägersignalen bei jedem halben Zyklus zu einem Zeitpunkt, zu dem die Dreieckwellen-Trägersignale einander kreuzen, gebildet werden;
ein Trägermuster aus der Vielzahl von Trägermustern ausgewählt wird, durch das ein Neutralpunktpotential auf der Grundlage eines Oberarm-Gleichspannungserfassungswerts (Ea), eines Unterarm-Gleichspannungserfassungswerts (Eb) und eines Ausgangsstromerfassungswerts (Iout) ausgeglichen wird; und
ein EINSCHALTEN/AUSSCHALTEN-Signal für jeden der Schalter erzeugt wird, indem eine PWM-Operation durchgeführt wird, die das ausgewählte Trägermuster mit einem Ausgangsspannungsbefehl (Vref) vergleicht.

2. Verfahren zur Steuerung des Neutralpunktpotentials für den einphasigen NPC-Wechselrichter nach Anspruch 1, wobei:
die Vielzahl der Trägermuster ein Trägermuster A und ein Trägermuster B sind,
das Trägermuster A ein Muster ist, bei dem ein U-Phasen-Oberarm-Dreieckwellen-Trägersignal (Cary Up) in einem ersten Viertelzyklus des halben Zyklus von 0,5 auf 0 abfällt und in einem letzten Viertelzyklus des halben Zyklus von 0 auf 0,5 ansteigt, ein V-Phasen-Oberarm-Dreieckwellen-Trägersignal (Cary Vp) in dem ersten Viertelzyklus des halben Zyklus von 0,5 auf 1 ansteigt und in dem letzten Viertelzyklus des halben Zyklus von 1 auf 0,5 abfällt, ein U-Phasen-Unterarm-Dreieckwellen-Trägersignal (Cary Un) in dem ersten Viertelzyklus des halben Zyklus von -0,5 auf -1 abfällt und in dem letzten Viertelzyklus des halben Zyklus von -1 auf-0,5 ansteigt, und ein V-Phasen-Unterarm-Dreieckwellen-Trägersignal (Cary Vn) in dem ersten Viertelzyklus des halben Zyklus von -0,5 auf 0 ansteigt und in dem letzten Viertelzyklus des halben Zyklus von 0 auf -0,5 abfällt, und
das Trägermuster B ein Muster ist, bei dem das U-Phasen-Oberarm-Dreieckwellen-Trägersignal (Cary Up) in dem ersten Viertelzyklus des halben Zyklus von 0,5 auf 1 ansteigt und in dem letzten Viertelzyklus des halben Zyklus von 1 auf 0,5 abfällt, das V-Phasen-Oberarm-Dreieckwellen-Trägersignal (Cary Vp) in dem ersten Viertelzyklus des halben Zyklus von 0,5 auf 0 abfällt und in dem letzten Viertelzyklus des halben Zyklus von 0 auf 0,5 ansteigt, das U-Phasen-Unterarm-Dreieckwellen-Trägersignal (Cary Un) in dem ersten Viertelzyklus des halben Zyklus von -0,5 auf 0 ansteigt und in dem letzten Viertelzyklus des halben Zyklus von 0 auf -0,5 abfällt, und das V-Phasen-Unterarm-Dreieckwellen-Trägersignal (Cary Vn) in dem ersten Viertelzyklus des halben Zyklus von -0,5 auf -1 abfällt und in dem letzten Viertelzyklus des halben Zyklus von -1 auf -0,5 ansteigt.

3. Verfahren zur Steuerung des Neutralpunktpotentials für den einphasigen NPC-Wechselrichter nach Anspruch 1, wobei:
die Vielzahl der Trägermuster ein Trägermuster C und ein Trägermuster D sind,
das Trägermuster C ein Muster ist, bei dem ein U-Phasen-Oberarm-Dreieckwellen-Trägersignal (Cary Up) in einem ersten Viertelzyklus des halben Zyklus von 0,5 auf 0 abfällt und in einem letzten Viertelzyklus des halben Zyklus von 0 auf 0,5 ansteigt, ein V-Phasen-Oberarm-Dreieckwellen-Trägersignal (Cary Vp) in dem ersten Viertelzyklus des halben Zyklus von 0,5 auf 1 ansteigt und in dem letzten Viertelzyklus des halben Zyklus von 1 auf 0,5 abfällt, ein U-Phasen-Unterarm-Dreieckwellen-Trägersignal (Cary Un) in dem ersten Viertelzyklus des halben-Zyklus von -0,5 auf 0 ansteigt und in dem letzten Viertelzyklus des halben Zyklus von 0 auf -0,5 abfällt, und ein V-Phasen-Unterarm-Dreieckwellen-Trägersignal (Cary Vn) in dem ersten Viertelzyklus des halben Zyklus von -0,5 auf -1 abfällt und in dem letzten Viertelzyklus des halben Zyklus von -1 auf -0,5 ansteigt, und
das Trägermuster D ein Muster ist, bei dem das U-Phasen-Oberarm-Dreieckwellen-Trägersignal (Cary Up) in dem ersten Viertelzyklus des halben Zyklus von 0,5 auf 1 ansteigt und in dem letzten Viertelzyklus des halben Zyklus von 1 auf 0,5 abfällt, das V-Phasen-Oberarm-Dreieckwellen-Trägersignal (Cary Vp) in dem ersten Viertelzyklus des halben Zyklus von 0,5 auf 0 abfällt und in dem letzten Viertelzyklus des halben Zyklus von 0 auf 0,5 ansteigt, das U-Phasen-Unterarm-Dreieckwellen-Trägersignal (Cary Un) in dem ersten Viertelzyklus des halben Zyklus von -0,5 auf -1 abfällt und in dem letzten Viertelzyklus des halben Zyklus von -1 auf-0,5 ansteigt, und das V-Phasen-Unterarm-Dreieckwellen-Trägersignal (Cary Vn) in dem ersten Viertelzyklus des halben Zyklus von -0,5 auf 0 ansteigt und in dem letzten Viertelzyklus des halben Zyklus von 0 auf -0,5 abfällt.

4. Verfahren zur Steuerung des Neutralpunktpotentials für einen einphasigen NPC-Wechselrichter, wobei der einphasige NPC-Wechselrichter eine Vielzahl von Kondensatoren, die zwischen beiden Anschlüssen einer Gleichspannungsquelle in Reihe geschaltet sind und durch die eine Gleichspannung (Vdc) zwischen den beiden Anschlüssen in Hälften geteilt wird, wobei ein Spannungsteilungspunkt ein Neutralpunkt (NP) ist; eine Wechselrichterschaltung, die eine Vielzahl von Schaltern (S1u-S4u, S1v-S4v) aufweist und die Gleichspannung in eine Wechselspannung umwandelt; und eine Schaltsignalerzeugungsschaltung (11) beinhaltet, die das EINSCHALTEN/AUSSCHALTEN der Schalter der Wechselrichterschaltung steuert,
**dadurch gekennzeichnet, dass**:
in der Schaltsignalerzeugungsschaltung (11),
Trägerkreuzungs-Zeitinformationen und Flächeninformationen nach dem Durchqueren einer Fläche, die dadurch gebildet wird, dass sie von Dreieckwellen-Trägersignalen eingeschlossen wird, durch eine PWM-Operation bestimmt werden, die einen Ausgangsspannungsbefehl (Vref) und ein Trägermuster vergleicht, das durch Teilen der Dreieckwellen-Trägersignale in jedem halben Zyklus zu einem Zeitpunkt gebildet wird, zu dem sich die Dreieckwellen-Trägersignale kreuzen; und
ein EINSCHALTEN/AUSSCHALTEN-Signal, durch das ein NeutralpunktPotential ausgeglichen wird, für jeden Schalter erzeugt wird, wobei die Trägerkreuzungs-Zeitinformationen, die Flächeninformationen nach dem Durchqueren der Fläche, ein Oberarm-Gleichspannungs-Erfassungswert (Ea), ein Unterarm-Gleichspannungs-Erfassungswert (Eb) und ein Ausgangsstrom-Erfassungswert (Iout) verwendet werden.

5. Verfahren zur Steuerung des Neutralpunktpotentials für einen Reihenzellen-Multiplex-Wechselrichter, der mehrere einphasige Wechselrichtereinheiten enthält, wobei die einphasige Wechselrichtereinheit einen einphasigen NPC-Wechselrichter enthält und eine Funktion zur Kommunikation mit einer zentralen Steuerverarbeitungsvorrichtung aufweist, wobei das Verfahren umfasst:
Steuern eines Neutralpunktpotentials jedes einphasigen NPC-Wechselrichters durch Verwenden des Steuerungsverfahrens nach einem der Ansprüche 1 bis 4.

6. Einphasiger NPC-Wechselrichter, der zum Verwenden des Verfahrens zur Steuerung des Neutralpunktpotentials nach einem der Ansprüche 1 bis 4 geeignet ist.

7. Reihenzellen-Multiplex-Wechselrichter, umfassend:
eine einphasige Wechselrichtereinheit (6), die einen einphasigen NPC-Wechselrichter enthält, der für die Verwendung des Verfahrens zur Steuerung des Neutralpunktpotentials nach Anspruch 5 geeignet ist.

## Revendications

1. Procédé de commande de potentiel de point neutre pour un onduleur NPC monophasé, l'onduleur NPC monophasé incluant une pluralité de condensateurs qui sont connectés en série entre les deux bornes d'une source de tension continue et par lesquels une tension continue (Vdc) entre les deux bornes est divisée en moitiés, un point de division de tension étant un point neutre (NP) ; un circuit onduleur qui présente une pluralité de commutateurs (S1u-S4u, S1v-S4v) et qui convertit la tension continue en une tension alternative ; et un circuit de génération de signaux de commutation (11) qui commande l'activation/la désactivation des commutateurs du circuit onduleur,
**caractérisé par** les étapes consistant à :
dans le circuit de génération de signaux de commutation (11),
fournir une pluralité de motifs de porteuse formés en divisant des signaux de porteuse à onde triangulaire tous les 1/2 cycles à un instant où les signaux de porteuse à onde triangulaire se croisent ;
sélectionner, parmi la pluralité de motifs de porteuse, un motif de porteuse par lequel un potentiel de point neutre est équilibré sur la base d'une valeur de détection de tension continue de bras supérieur (Ea), d'une valeur de détection de tension continue de bras inférieur (Eb) et d'une valeur de détection de courant de sortie (Iout) ; et
générer un signal d'activation/désactivation pour chaque commutateur en effectuant une opération PWM qui compare le motif de porteuse sélectionné avec une instruction de tension de sortie (Vref).

2. Procédé de commande de potentiel de point neutre pour l'onduleur NPC monophasé selon la revendication 1, dans lequel :
la pluralité de motifs de porteuse sont un motif de porteuse A et un motif de porteuse B,
le motif de porteuse A est un motif dans lequel un signal de porteuse à onde triangulaire de bras supérieur de phase U (Cary Up) diminue de 0,5 à 0 dans un premier 1/4 de cycle du 1/2 cycle et augmente de 0 à 0,5 dans un dernier 1/4 de cycle du 1/2 cycle, un signal de porteuse à onde triangulaire de bras supérieur de phase V (Cary Vp) augmente de 0,5 à 1 dans le premier 1/4 de cycle du 1/2 cycle et diminue de 1 à 0,5 dans le dernier 1/4 de cycle du 1/2 cycle, un signal de porteuse à onde triangulaire de bras inférieur de phase U (Cary Un) diminue de -0,5 à -1 dans le premier 1/4 de cycle du 1/2 cycle et augmente de -1 à -0,5 dans le dernier 1/4 de cycle du 1/2 cycle, et un signal de porteuse à onde triangulaire de bras inférieur de phase V (Cary Vn) augmente de -0,5 à 0 dans le premier 1/4 de cycle du 1/2 cycle et diminue de 0 à -0,5 dans le dernier 1/4 de cycle du 1/2 cycle, et
le motif de porteuse B est un motif dans lequel le signal de porteuse à onde triangulaire de bras supérieur de phase U (Cary Up) augmente de 0,5 à 1 dans le premier 1/4 de cycle du 1/2 cycle et diminue de 1 à 0,5 dans le dernier 1/4 de cycle du 1/2 cycle, le signal de porteuse à onde triangulaire de bras supérieur de phase V (Cary Vp) diminue de 0,5 à 0 dans le premier 1/4 de cycle du 1/2 cycle et augmente de 0 à 0,5 dans le dernier 1/4 de cycle du 1/2 cycle, le signal de porteuse à onde triangulaire de bras inférieur de phase U (Cary Un) augmente de -0,5 à 0 dans le premier 1/4 de cycle du 1/2 cycle et diminue de 0 à -0,5 dans le dernier 1/4 de cycle du 1/2 cycle, et le signal de porteuse à onde triangulaire de bras inférieur de phase V (Cary Vn) diminue de -0,5 à -1 dans le premier 1/4 de cycle du 1/2 cycle et augmente de -1 à -0,5 dans le dernier 1/4 de cycle du 1/2 cycle.

3. Procédé de commande de potentiel de point neutre pour l'onduleur NPC monophasé selon la revendication 1, dans lequel :
la pluralité de motifs de porteuse sont un motif de porteuse C et un motif de porteuse D,
le motif de porteuse C est un motif dans lequel un signal de porteuse à onde triangulaire de bras supérieur de phase U (Cary Up) diminue de 0,5 à 0 dans un premier 1/4 de cycle du 1/2 cycle et augmente de 0 à 0,5 dans un dernier 1/4 de cycle du 1/2 cycle, un signal de porteuse à onde triangulaire de bras supérieur de phase V (Cary Vp) augmente de 0,5 à 1 dans le premier 1/4 de cycle du 1/2 cycle et diminue de 1 à 0,5 dans le dernier 1/4 de cycle du 1/2 cycle, un signal de porteuse à onde triangulaire de bras inférieur de phase U (Cary Un) augmente de -0,5 à 0 dans le premier 1/4 de cycle du 1/2 cycle et diminue de 0 à -0,5 dans le dernier 1/4 de cycle du 1/2 cycle, et un signal de porteuse à onde triangulaire de bras inférieur de phase V (Cary Vn) diminue de -0,5 à -1 dans le premier 1/4 de cycle du 1/2 cycle et augmente de -1 à -0,5 dans le dernier 1/4 de cycle du 1/2 cycle, et
le motif de porteuse D est un motif dans lequel le signal de porteuse à onde triangulaire de bras supérieur de phase U (Cary Up) augmente de 0,5 à 1 dans le premier 1/4 de cycle du 1/2 cycle et diminue de 1 à 0,5 dans le dernier 1/4 de cycle du 1/2 cycle, le signal de porteuse à onde triangulaire de bras supérieur de phase V (Cary Vp) diminue de 0,5 à 0 dans le premier 1/4 de cycle du 1/2 cycle et augmente de 0 à 0,5 dans le dernier 1/4 de cycle du 1/2 cycle, le signal de porteuse à onde triangulaire de bras inférieur de phase U (Cary Un) diminue de -0,5 à -1 dans le premier 1/4 de cycle du 1/2 cycle et augmente de -1 à -0,5 dans le dernier 1/4 de cycle du 1/2 cycle, et le signal de porteuse à onde triangulaire de bras inférieur de phase V (Cary Vn) augmente de -0,5 à 0 dans le premier 1/4 de cycle du 1/2 cycle et diminue de 0 à -0,5 dans le dernier 1/4 de cycle du 1/2 cycle.

4. Procédé de commande de potentiel de point neutre pour un onduleur NPC monophasé, l'onduleur NPC monophasé incluant une pluralité de condensateurs qui sont connectés en série entre les deux bornes d'une source de tension continue et par lesquels une tension continue (Vdc) entre les deux bornes est divisée en moitiés, un point de division de tension étant un point neutre (NP) ; un circuit onduleur qui présente une pluralité de commutateurs (S1u-S4u, S1v-S4v) et qui convertit la tension continue en une tension alternative ; et un circuit de génération de signaux de commutation (11) qui commande l'activation/la désactivation des commutateurs du circuit onduleur,
**caractérisé par** les étapes consistant à :
dans le circuit de génération de signaux de commutation (11),
déterminer des informations temporelles de croisement de porteuse et des informations de zone après la transition d'une zone qui est formée en étant entourée de signaux de porteuse à onde triangulaire, par une opération PWM qui compare une instruction de tension de sortie (Vref) et un motif de porteuse formé en divisant les signaux de porteuse à onde triangulaire tous les 1/2 cycles à un instant où les signaux de porteuse à onde triangulaire se croisent ; et
générer un signal d'activation/désactivation pour chaque commutateur par lequel un potentiel de point neutre est équilibré, en utilisant les informations temporelles de croisement de porteuse, les informations de zone après la transition de la zone, une valeur de détection de tension continue de bras supérieur (Ea), une valeur de détection de tension continue de bras inférieur (Eb) et une valeur de détection de courant de sortie (Iout).

5. Procédé de commande de potentiel de point neutre pour un onduleur multiniveaux à cellules en série comprenant une pluralité d'unités d'onduleur monophasés, l'unité d'onduleur monophasé incluant un onduleur NPC monophasé et présentant une fonction de communication avec un dispositif de traitement de commande central, le procédé comprenant l'étape consistant à :
commander un potentiel de point neutre de chaque onduleur NPC monophasé en utilisant le procédé de commande selon l'une quelconque des revendications 1 à 4.

6. Onduleur NPC monophasé adapté à utiliser le procédé de commande de potentiel de point neutre selon l'une quelconque des revendications 1 à 4.

7. Onduleur multiniveaux à cellules en série comprenant :
une unité d'onduleur monophasé (6) qui inclut un onduleur NPC monophasé adapté à utiliser le procédé de commande de potentiel de point neutre selon la revendication 5.
